# DEMANDE DE BREVET EUROPEEN

(11) **EP 2 104 197 A1**
(43) Date de publication de la demande: **23.09.2009**
(21) Numéro de dépôt: 09154770.3
(22) Date de dépôt: 10.03.2009
(51) Int. Cl.: H02G 15/34, H01R 4/68

(54) **Structure de connexion électrique pour élement supraconducteur**

(30) Priorité: 20.03.2008 FR 0851793
(71) Demandeur: Nexans, 75008 Paris (FR)
(72) Inventeur: Lallouet, Nicolas, 75008, PARIS (FR); Delplace, Sébastien, 75008, PARIS (FR)
(74) Mandataire: Lenne, Laurence

(57) **Abrégé**

L'invention concerne une structure de connexion électrique à haute tension pour élément supraconducteur (30) refroidi par un fluide cryogénique (31) dans un cryostat (33) et relié à une traversée électrique (39), qui traverse au moins une enceinte à température ambiante (48), ladite traversée (39) comportant un conducteur central (40) dont l'extrémité supérieure est connectée au moyen d'un agencement de connexion à une pièce de connexion (58) débouchant à l'extérieur de l'enceinte à température ambiante en traversant une paroi supérieure (50) de ladite chambre, ledit conducteur central (40) étant entouré sur la majeure partie de sa longueur d'une gaine électriquement isolante (41) fixée de façon rigide sur la paroi inférieure de ladite enceinte à température ambiante.

Selon l'invention, l'agencement de connexion (1) comprend une pièce conductrice (2) montée sur ladite extrémité supérieure à température ambiante du conducteur central et une pluralité d'éléments conducteurs (3) déformables et connectés à ladite pièce conductrice (2) et à ladite pièce de connexion (58), ladite pièce conductrice (2) comportant une paroi cylindrique (2A) entourant lesdits éléments conducteurs (3) et formant un écran relativement au champ électrique.

## Description

La présente invention a pour objet une structure de connexion électrique pour élément supraconducteur, tel qu'un câble transportant du courant électrique sous moyenne ou haute tension. Cette structure permet de relier l'extrémité de l'élément supraconducteur à température cryogénique à un équipement à température ambiante, habituellement à l'air libre.

Du fait de la différence importante de température entre l'élément supraconducteur et l'équipement à relier audit élément, d'une part la température cryogénique qui peut être de l'ordre de -200°C et d'autre part la température ambiante, il est nécessaire d'intercaler une structure de connexion entre l'élément supraconducteur et l'équipement, afin d'effectuer la transition de température en limitant au maximum les pertes thermiques, tout en respectant les contraintes électriques dues par exemple à la haute tension dans le cas d'un câble. Cette structure comporte alors une traversée électrique composée principalement d'un conducteur central entouré d'une gaine isolante, pour transporter le courant électrique du câble supraconducteur jusqu'à une connexion de sortie à température ambiante. Cette structure doit, sur une longueur raisonnable, effectuer la transition de température tout en s'assurant que les pertes par conduction thermique sont faibles, de façon à éviter l'ébullition du liquide cryogénique qui refroidit le câble et/ou de façon à ne pas augmenter les coûts de refroidissement du câble.

Une telle structure est décrite dans le document de brevet EP 1 703 610 et est illustrée en coupe longitudinale sur la figure 1.

Elle comporte un câble supraconducteur 30 refroidi par un fluide cryogénique 31, de l'azote liquide par exemple, contenu dans un cryostat 33. La zone désignée par la référence 36 est à la température cryogénique, ce qui pour les supraconducteurs dits "haute température" est de l'ordre de -200°C.

L'extrémité supérieure du câble supraconducteur est reliée par une connexion électrique 37 à l'extrémité inférieure 38 d'une traversée électrique 39. Cette dernière est principalement constituée d'un conducteur central 40, en alliage d'aluminium ou en cuivre, autour duquel a été moulée une gaine électriquement isolante 41, réalisée par exemple en époxy. La surface externe de la gaine isolante est recouverte d'une couche d'un matériau électriquement conducteur, par métallisation par exemple.

Les parois interne et externe du cryostat se prolongent verticalement pour former les parois latérales d'une enceinte intermédiaire 45. L'enceinte intermédiaire est remplie d'un matériau solide à faible conductivité thermique. Ce matériau est de préférence sous forme de mousse, telle qu'une mousse au polyuréthane ou une mousse de verre cellulaire. La température de la zone 47 est intermédiaire entre la température cryogénique et la température ambiante.

Au-dessus de l'enceinte intermédiaire 45, une enceinte à température ambiante 48 est fixée sur un plateau 46. La traversée électrique 39 traverse de façon étanche cette paroi supérieure 46 à l'aide d'une bride de fixation et d'étanchéité et débouche à l'extérieur de l'enceinte 48 à travers la paroi supérieure 50 de cette enceinte à température ambiante. La paroi latérale de cette dernière est constituée d'un isolant électrique 51, par exemple une résine époxy renforcée par des fibres de verre. L'enceinte 48 à température ambiante est remplie jusqu'au niveau 53 d'un liquide 54 bon isolant électrique, tel que de l'huile silicone. En plus d'assurer une bonne isolation électrique de la traversée électrique 39, le liquide 54 facilite la stabilisation thermique de l'enceinte à température ambiante. La zone 55 est ainsi à une température proche de la température ambiante.

La gaine électriquement isolante 41 est fixée de manière rigide et étanche par une bride à la paroi horizontale séparant le cryostat 33 et l'enceinte intermédiaire 45. Une étanchéité est également réalisée sur cette gaine électriquement isolante 41 au niveau de la paroi supérieure horizontale 46 séparant l'enceinte intermédiaire 45 et l'enceinte à température ambiante 48.

Le conducteur central 40 est dépourvue de gaine électriquement isolante 41 à son extrémité supérieure et se raccorde à l'extérieur de l'enceinte à température ambiante 48 à une cosse de connexion 58 pour alimenter le câble supraconducteur en courant électrique sous moyenne ou haute tension ou pour alimenter un équipement à température ambiante en courant électrique sous moyenne ou haute tension en provenance du câble supraconducteur 30.

L'invention se rapporte à cette connexion de l'extrémité supérieure du conducteur central.

Ce conducteur peut avoir une longueur de plus de 2,5 mètres, au-dessus du fluide cryogénique, et compte tenu des tolérances de diverses pièces d'assemblage et de la fixation rigide par brides de la gaine électriquement isolante, il s'avère difficile d'obtenir un alignement parfait de la traversée 39 à travers les divers éléments d'assemblage 45, 46, 48, 50, afin que l'extrémité du conducteur 40 vienne se positionner sur la cosse de connexion 58 disposée sur l'axe longitudinal de la structure.

Il est alors préjudiciable de forcer sur la traversée pour sa mise en place, car elle peut être endommagée. De plus, la traversée 39 étant entourée sur sa majeure partie de sa longueur par la gaine électriquement isolante, cet ensemble conducteur et gaine est rigide et très peu flexible.

Par ailleurs, le conducteur peut se rétracter verticalement sous l'influence de la température relativement basse à laquelle il est soumis dans la structure, en particulier dans les zones inférieures 36 et 47. Son extrémité supérieure peut donc se translater vers le bas et entraîner une déconnexion.

Il est d'ailleurs connu de tenir compte de ce problème de rétraction, en divisant un conducteur d'un élément supraconducteur refroidi par un fluide cryogénique, en un grand nombre de fins conducteurs adjacents et éventuellement toronnés, comme décrit le document de brevet WO 92/29930.

L'invention résout plus précisément les problèmes de montage mécaniques en proposant un agencement de connexion de l'extrémité supérieure à température ambiante du conducteur à la cosse de connexion qui permette un débattement de la position de cette extrémité dans les trois dimensions.

Pour ce faire l'invention propose une structure de connexion électrique à haute tension pour élément supraconducteur refroidi par un fluide cryogénique dans un cryostat et relié à une traversée électrique, qui traverse au moins une enceinte à température ambiante, ladite traversée comportant un conducteur central dont l'extrémité supérieure est connectée au moyen d'un agencement de connexion à une pièce de connexion débouchant à l'extérieur de l'enceinte à température ambiante en traversant une paroi supérieure de ladite chambre, ledit conducteur central étant entouré sur la majeure partie de sa longueur d'une gaine électriquement isolante fixée de façon rigide sur la paroi inférieure de ladite enceinte à température ambiante, structure caractérisée en ce ledit agencement de connexion comprend une pièce conductrice montée sur ladite extrémité supérieure à température ambiante du conducteur central et une pluralité d'éléments conducteurs déformables et connectés à ladite pièce conductrice et à ladite pièce de connexion, ladite pièce conductrice comportant une paroi cylindrique entourant lesdits éléments conducteurs et formant et formant un écran relativement au champ électrique.

Ainsi, par déformation des éléments conducteurs, il est possible de les connecter à la fois sur la pièce conductrice et sur la pièce de connexion, même si ces deux pièces sont décentrées l'une de l'autre et, dans une moindre mesure, si le conducteur se rétracte verticalement.

Selon un mode de réalisation préféré, lesdits éléments conducteurs sont des tresses métalliques.

De préférence, lesdites tresses sont régulièrement réparties autour de l'axe longitudinal du conducteur.

Avantageusement, lesdites tresses sont enchâssées et soudées dans ladite pièce conductrice.

Avantageusement, lesdites tresses sont enchâssées et soudées dans ladite pièce de connexion.

Ladite pièce conductrice peut être en cuivre.

Lesdits éléments conducteurs peuvent être en cuivre.

Ladite pièce de connexion est de préférence une barre conductrice comportant une bride annulaire dans laquelle sont connectés lesdits éléments conducteurs.

De préférence, une enceinte intermédiaire est intercalée entre ledit cryostat et ladite enceinte à température ambiante et ladite gaine électriquement isolante est fixée de façon rigide sur la paroi inférieure de ladite enceinte intermédiaire.

L'invention est décrite ci-après à l'aide de figures ne représentant qu'un mode de réalisation préféré de l'invention.

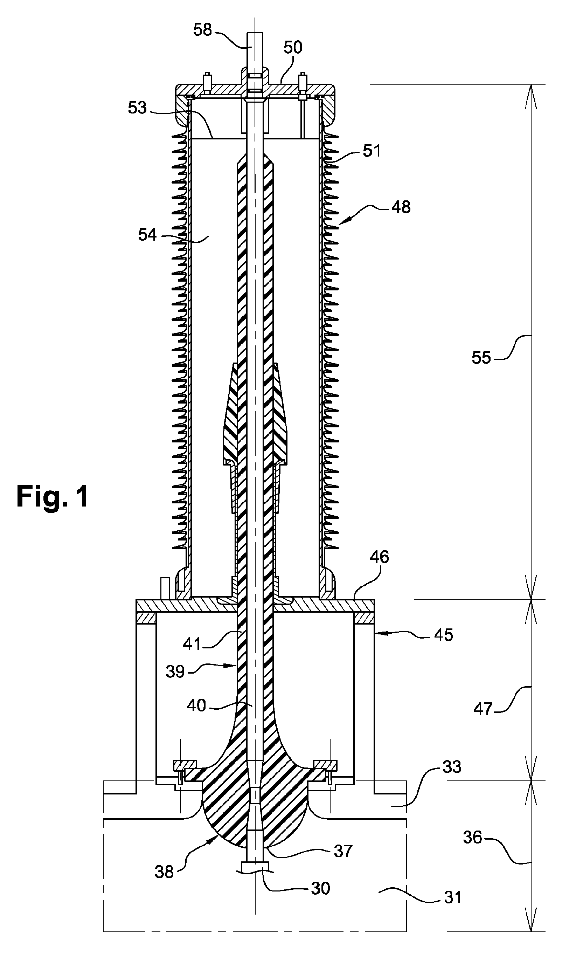

La figure 1 déjà décrite est une vue en coupe longitudinale d'une structure supraconductrice connue.
La figure 2 est une vue en coupe longitudinale partielle d'une structure supraconductrice conforme à l'invention.
La figure 3 est une vue en perspective d'un agencement de connexion d'une structure supraconductrice conforme à l'invention.
La figure 4 est une vue en perspective et en coupe selon IV-IV d'un agencement de connexion d'une structure supraconductrice conforme à l'invention.

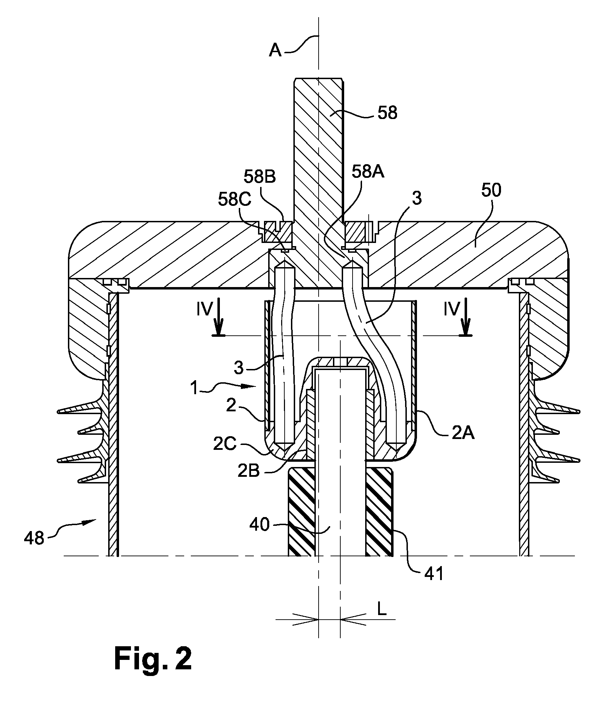

La figure 2 représente la partie haute d'une structure de connexion du type déjà décrit.

Le conducteur central 40 est donc dépourvue de gaine électriquement isolante 41 à son extrémité supérieure et se raccorde à l'extérieur de l'enceinte à température ambiante 48 à une cosse de connexion 58 traversant la paroi supérieure 50 de cette enceinte. Ainsi est réalisée l'alimentation du câble supraconducteur en courant électrique sous moyenne ou haute tension ou l'alimentation d'un équipement à température ambiante en courant électrique sous moyenne ou haute tension en provenance du câble supraconducteur.

Pour réaliser la connexion du conducteur central 40 à cette cosse 58, l'extrémité supérieure du conducteur est connectée au moyen d'un agencement de connexion 1 à la cosse 58, qui est plus généralement une pièce de connexion, et qui débouche à l'extérieur de l'enceinte à température ambiante 48 en traversant la paroi supérieure 50 de la chambre, à laquelle elle est fixée par exemple par vissage 58B avec interposition d'un joint d'étanchéité 58C assurant l'étanchéité de l'enceinte vis à vis de l'environnement extérieur.

Cet agencement de connexion 1 comprend une pièce conductrice 2, de préférence en cuivre, montée sur l'extrémité supérieure du conducteur 40 avec interposition d'une bague multi contact 2B et une pluralité d'éléments conducteurs 3 déformables et connectés à la pièce conductrice 2 par leur extrémité inférieure et à la pièce de connexion 58 par leur extrémité supérieure, la pièce conductrice 2 comportant une paroi cylindrique 2A entourant les éléments conducteurs 3.

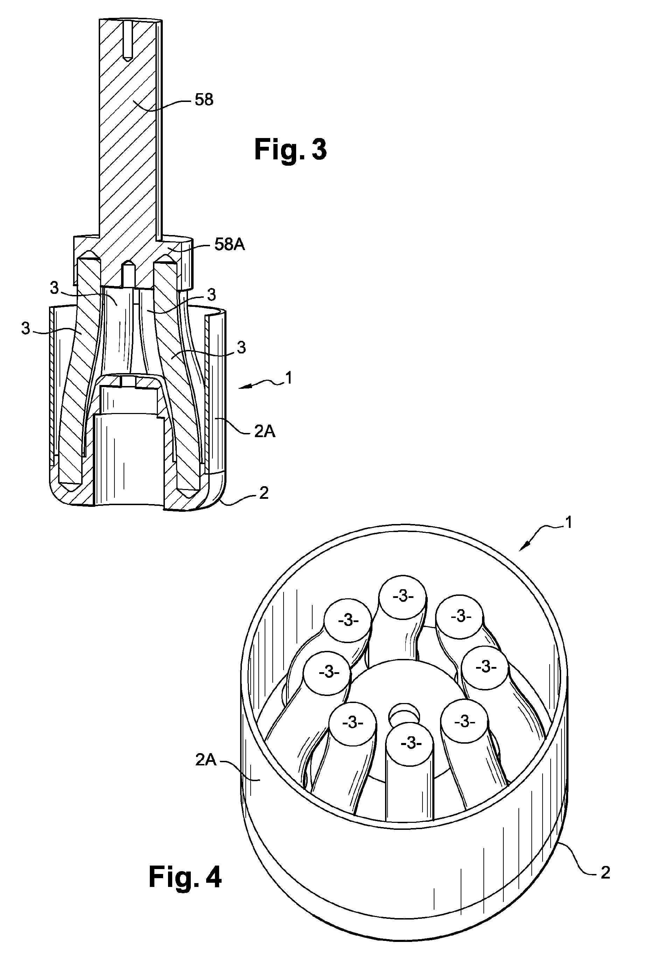

Les figures 3 et 4 représentent également en détail cet agencement de connexion.

Les éléments conducteurs 3 sont des tresses métalliques cylindriques, de préférence en cuivre et d'une section relativement importante de l'ordre de 250 mm² pour chaque tresse, et sont régulièrement réparties autour de l'axe longitudinal du conducteur. Dans l'exemple représenté, elles sont au nombre de huit. Elles sont enchâssées par leur extrémité inférieure dans la pièce conductrice 2 et par leur extrémité supérieure dans la pièce de connexion 58 et y sont soudées à l'argent. Plus précisément, la pièce de connexion 58 est une barre conductrice comportant une bride annulaire 58A dans laquelle sont enchâssées les extrémités supérieures des tresses.

La pièce conductrice 2 est en fait constituée de deux parties, une partie inférieure 2C de connexion au conducteur 40 et un capot formant la paroi cylindrique 2A qui est soudé à la première pièce inférieure 2C. Ce capot 2A assure la protection des tresses 3 qui pourraient créer des problèmes de claquage en haute tension sans la présence de ce capot.

Grâce à la grande capacité de déformation des tresses 3, cet agencement de connexion 1 permet la connexion électrique du conducteur 40 et de la pièce de connexion 58, sans risque de contraintes appliquées aux deux éléments. Et ceci malgré un décentrement du conducteur 40 par rapport à l'axe longitudinal A de la structure, illustré par la distance L sur la figure 2, et/ou une rétraction verticale du conducteur 40 sous l'influence des températures relativement basses dans la partie inférieure de la structure. L'agencement conforme à l'invention assure donc une parfaite connexion, malgré un débattement dans les trois dimensions du conducteur 40.

## Revendications

1. Structure de connexion électrique à haute tension pour élément supraconducteur (30) refroidi par un fluide cryogénique (31) dans un cryostat (33) et relié à une traversée électrique (39), qui traverse au moins une enceinte à température ambiante (48), ladite traversée (39) comportant un conducteur central (40) dont l'extrémité supérieure est connectée au moyen d'un agencement de connexion à une pièce de connexion (58) débouchant à l'extérieur de l'enceinte à température ambiante en traversant une paroi supérieure (50) de ladite chambre, ledit conducteur central (40) étant entouré sur la majeure partie de sa longueur d'une gaine électriquement isolante (41) fixée de façon rigide sur la paroi inférieure (46) de ladite enceinte à température ambiante, structure **caractérisée en ce** ledit agencement de connexion (1) comprend une pièce conductrice (2) montée sur ladite extrémité supérieure à température ambiante du conducteur central et une pluralité d'éléments conducteurs (3) déformables et connectés à ladite pièce conductrice (2) et à ladite pièce de connexion (58), ladite pièce conductrice (2) comportant une paroi cylindrique (2A) entourant lesdits éléments conducteurs (3) et formant un écran relativement au champ électrique.

2. Structure selon la revendication précédente, **caractérisée en ce que** lesdits éléments conducteurs (3) sont des tresses métalliques.

3. Structure selon la revendication précédente, **caractérisée en ce que** lesdites tresses (3) sont régulièrement réparties autour de l'axe longitudinal du conducteur.

4. Structure selon la revendication 2 ou 3, **caractérisée en ce que** lesdites tresses (3) sont enchâssées et soudées dans ladite pièce conductrice (2).

5. Structure selon l'une des revendications 2 à 4, **caractérisée en ce que** lesdites tresses (3) sont enchâssées et soudées dans ladite pièce de connexion (58).

6. Structure selon l'une des revendications précédentes, **caractérisée en ce que** ladite pièce conductrice (2) est en cuivre.

7. Structure selon l'une des revendications précédentes, **caractérisée en ce que** lesdits éléments conducteurs (3) sont en cuivre.

8. Structure selon l'une des revendications précédentes, **caractérisée en ce que** ladite pièce de connexion (58) est un barre conductrice comportant une bride annulaire (58A) dans laquelle sont connectés lesdits éléments conducteurs (3).

9. Structure selon l'une des revendications précédentes, **caractérisée en ce qu'**une enceinte intermédiaire (45) est intercalée entre ledit cryostat (33) et ladite enceinte à température ambiante (48) et **en ce que** ladite gaine électriquement isolante (41) est fixée de façon rigide sur la paroi inférieure de ladite enceinte intermédiaire (45).
